# EUROPÄISCHE PATENTSCHRIFT

(11) **EP 3 949 281 B1**
(45) Veröffentlichungstag und Bekanntmachung des Hinweises auf die Patenterteilung: **03.09.2025**
(21) Anmeldenummer: 20717155.4
(22) Anmeldetag: 02.04.2020
(51) Int. Cl.: H04L 43/0805, H04L 43/0817

(54) **VERFAHREN ZUM ÜBERWACHEN VON WENIGSTENS EINER FERTIGUNGSSTATION, SIGNALABNAHMEVORRICHTUNG FÜR EIN SOLCHES VERFAHREN, UND VERWENDUNG EINER SOLCHEN SIGNALABNAHMEVORRICHTUNG**
METHOD FOR MONITORING AT LEAST ONE MANUFACTURING STATION, SIGNAL PICKUP APPARATUS FOR SUCH A METHOD, AND USE OF SUCH A SIGNAL PICKUP APPARATUS
PROCÉDÉ DE SURVEILLANCE D'AU MOINS UN POSTE DE FABRICATION, DISPOSITIF D'ACQUISITION DE SIGNAL POUR UN TEL PROCÉDÉ, ET UTILISATION D'UN TEL DISPOSITIF D'ACQUISITION DE SIGNAL

(30) Priorität: 05.04.2019 DE 102019204921
(43) Veröffentlichungstag der Anmeldung: 09.02.2022
(73) Patentinhaber: MAPAL Dr. Kress SE & Co. KG, 73431 Aalen (DE)
(72) Erfinder: KÖSTLER, Stephan, 73540 Heubach (DE)
(74) Vertreter: Kordel, Mattias
(86) Internationale Anmeldenummer: PCT/EP2020/059468
(87) Internationale Veröffentlichungsnummer: WO 2020/201464

(56) Entgegenhaltungen:
- EP-A1- 1 071 055
- EP-A1- 2 457 501
- US-A1- 2008 214 903
- US-A1- 2012 290 266

## Beschreibung

Die Erfindung betrifft ein Verfahren zum Überwachen von wenigstens einer Fertigungsstation, eine Signalabnahmevorrichtung für ein solches Verfahren, und eine Verwendung einer solchen Signalabnahmevorrichtung in einem solchen Verfahren.

In großen Maschinenparks sind einzelne Fertigungsstationen typischerweise miteinander vernetzt und mit einer zentralen Datenerfassung verbunden, sodass zu jeder Zeit Informationen über einen mehrere Fertigungsstationen umfassenden Gesamtprozess zur Verfügung stehen. Dies erlaubt in einfacher und schneller Weise eine Überwachung der einzelnen Fertigungsstationen sowie eine Analyse und Bewertung des Gesamtprozesses. Bei kleineren Maschinenparks ist eine solche Vernetzung verschiedener Fertigungsstationen typischerweise nicht vorhanden, was ganz besonders dann der Fall ist, wenn die einzelnen Fertigungsstationen von unterschiedlichen Herstellern stammen und damit gegebenenfalls bereits von Haus aus nicht oder nicht ohne weiteres miteinander kompatibel sind, beispielsweise weil sie keine gemeinsamen Schnittstellen oder Datentransferprotokolle aufweisen. Auch bei solchen kleineren Maschinenparks besteht aber grundsätzlich das Bedürfnis, die einzelnen Fertigungsstationen überwachen und einen sich über mehrere Fertigungsstationen erstreckenden Gesamtprozess analysieren und bewerten zu können. Eine Überwachung der Fertigungsstationen ist typischerweise nur dann möglich, wenn unmittelbarer Zugang zu den Fertigungsstationen besteht, beispielsweise indem einem menschlichen Beobachter optische und/oder akustische Meldungen der einzelnen Fertigungsstationen direkt zugänglich sind. So weisen solche Fertigungsstationen typischerweise insbesondere sogenannte Maschinenampeln auf, die mittels verschiedenfarbiger Leuchten, die einzeln aktiviert werden können, ihren internen Zustand melden. Insbesondere ein relativ zu einem Maschinenpark erhöht positionierter Beobachter kann dann die verschiedenen Maschinenampeln der verschiedenen Fertigungsstationen zugleich überwachen und Fehler im Gesamtprozess oder Störungen einzelner Fertigungsstationen identifizieren. Eine Überwachung von einem entfernten Ort, in dem Sinn, dass keine direkte Beobachtung möglich ist, ist dagegen nicht möglich.

Dokument US 2012 290266 A1 offenbart das Überwachen des Körpers einer Person mit einer Mehrzahl von Sensoren.

Der Erfindung liegt die Aufgabe zugrunde, ein Verfahren zum Überwachen von wenigstens einer Fertigungsstation, eine Signalabnahmevorrichtung für ein solches Verfahren sowie eine Verwendung einer Signalabnahmevorrichtung in einem solchen Verfahren zu schaffen, wobei die genannten Nachteile nicht auftreten. Insbesondere soll eine Fernüberwachung der wenigstens einen Fertigungsstation ermöglicht werden.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Verfahren zum Überwachen von wenigstens einer Fertigungsstation geschaffen wird, welches folgende Schritt aufweist: Wenigstens ein psychophysiologisch-sensorisch wahrnehmbares Signal wird an wenigstens einer Fertigungsstation automatisch erfasst; wenigstens ein maschinenlesbares Datum wird in Abhängigkeit von dem wenigstens einen erfassten Signal erzeugt oder verändert, und eine von dem wenigstens einen maschinenlesbaren Datum abhängige Information wird an ein von der wenigstens einen Fertigungsstation entferntes, das heißt beabstandetes, Endgerät übertragen. Ein menschlicher Beobachter wird so in die Lage versetzt, an einem von der wenigstens einen Fertigungsstation entfernten Ort auf dem Endgerät oder mittels des Endgeräts Informationen zur Kenntnis zu nehmen, die ansonsten lediglich durch unmittelbare psychophysiologisch-sensorische Wahrnehmung an der wenigstens einen Fertigungsstation erhalten werden könnten. Somit muss der Beobachter nicht mehr in unmittelbarem Kontakt mit der Fertigungsstation stehen, insbesondere bedarf es keiner ungehinderten sensorischen Verbindung mit der Fertigungsstation mehr, beispielsweise einer direkten Blickverbindung, einer ungehinderten akustischen Verbindung oder eines taktilen Kontakts, um die entsprechenden Informationen zu erhalten.

Unter einer Fertigungsstation wird eine örtlich begrenzte Arbeitseinheit zur Bearbeitung eines Werkstücks oder mehrerer Werkstücke verstanden, die wenigstens eine Bearbeitungsmaschine umfasst. Insbesondere wird unter einer Fertigungsstation ein Bearbeitungszentrum verstanden, wobei ein solches Bearbeitungszentrum wenigstens eine Maschinenspindel aufweist, die eingerichtet ist zum Einspannen eines Werkzeugs zur insbesondere spanenden Bearbeitung eines Werkstücks. Ein Maschinenpark weist typischerweise eine Mehrzahl solcher Fertigungsstationen auf. Ein Gesamtprozess umfasst typischerweise die sequentielle Bearbeitung eines Werkstücks in einer Mehrzahl solcher Fertigungsstationen nacheinander, wobei in den verschiedenen Fertigungsstationen verschiedene Bearbeitungsschritte an dem Werkstück durchgeführt werden.

Unter einem psychophysiologisch-sensorisch wahrnehmbaren Signal wird ein Reiz oder die Änderung eines Reizes verstanden, der/die mit menschlichen Sinnen wahrnehmbar ist, insbesondere mit dem Gesichtssinn, dem Gehör, dem Geruchssinn, dem Geschmackssinn, dem Tastsinn, oder dem Temperaturempfinden, insbesondere also optisch, akustisch, olfaktorisch, gustatorisch, taktil und/oder thermorezeptorisch. Dass das Signal mit den menschlichen Sinnen wahrnehmbar ist, schließt gewisse Beschränkungen für das Signal ein, insbesondere in Hinblick auf eine optische Wellenlänge und/oder einen akustischen Frequenzbereich des Signals. Ein psychophysiologisch-sensorisch wahrnehmbares Signal ist also insbesondere ein Signal, welches durch einen menschlichen Beobachter unmittelbar an der wenigstens einen Fertigungsstation ohne technische Hilfsmittel wahrgenommen werden kann.

Insbesondere wird unter einem psychophysiologisch-sensorisch wahrnehmbaren Signal ein Signal, das heißt ein Reiz oder die Änderung eines Reizes, verstanden, das durch die Fertigungsstation - insbesondere gezielt, vorzugsweise ausschließlich - zur Wahrnehmung durch einen menschlichen Beobachter erzeugt wird, insbesondere zur Wahrnehmung durch den menschlichen Beobachter in unmittelbarem, das heißt insbesondere nicht durch eine zusätzliche technische Einrichtung vermittelten, Kontakt - insbesondere visueller, akustischer oder haptischer Kontakt, das heißt insbesondere freies Sicht- oder Hörfeld oder direkte Berührung - zu der Fertigungsstation, insbesondere unmittelbar an der Fertigungsstation.

Insbesondere ist das psychophysiologisch-sensorisch wahrnehmbare Signal so ausgestaltet, dass es lediglich durch unmittelbare psychophysiologisch-sensorische Wahrnehmung an der Fertigungsstation erfasst werden kann.

Bevorzugt ist das psychophysiologisch-sensorisch wahrnehmbare Signal ein optisch, akustisch, olfaktorisch, gustatorisch und/oder taktil wahrnehmbares Signal; bevorzugt ein optisch oder akustisch wahrnehmbares Signal; besonders bevorzugt ein optisch wahrnehmbares Signal.

Bevorzugt ist das psychophysiologisch-sensorisch wahrnehmbare Signal ein Lichtsignal oder Farbsignal, insbesondere ein Signal einer Maschinenampel.

Unter einem Endgerät wird insbesondere eine - stationäre oder bevorzugt mobile - Recheneinrichtung verstanden, die eingerichtet ist zur Interaktion mit einem menschlichen Nutzer. Insbesondere weist ein solches Endgerät wenigstens eine Ausgabeeinrichtung auf, insbesondere eine optische Ausgabeeinrichtung, insbesondere ein Display, oder eine akustische Ausgabeeinrichtung, insbesondere einen Lautsprecher. In bevorzugter Ausgestaltung kann das Endgerät insbesondere ein Tablet oder ein Smartphone sein.

Vorzugsweise wird das wenigstens eine psychophysiologisch-sensorisch wahrnehmbare Signal mittels einer Signalabnahmevorrichtung automatisch erfasst, wobei die Signalabnahmevorrichtung in Abhängigkeit von dem erfassten Signal das wenigstens eine maschinenlesbare Datum erzeugt oder verändert. Insbesondere ist es möglich, dass die Signalabnahmevorrichtung das wenigstens eine Signal in das maschinenlesbare Datum umwandelt, insbesondere das Signal digitalisiert oder mittels des wenigstens einen digitalen Datums repräsentiert.

In bevorzugter Ausgestaltung ist mit der Signalabnahmevorrichtung eine Recheneinrichtung wirkverbunden, an welche das wenigstens eine maschinenlesbare Datum übermittelt wird. Es ist möglich, dass die Recheneinrichtung das wenigstens eine maschinenlesbare Datum ihrerseits verändert oder in Abhängigkeit von dem maschinenlesbaren Datum ein neues, anderes maschinenlesbares Datum erzeugt. Die Recheneinrichtung ist vorzugsweise in der Fertigungsstation oder an der Fertigungsstation angeordnet. Ist die Recheneinrichtung in der Fertigungsstation angeordnet oder in die Fertigungsstation integriert, kann es sich hierbei insbesondere um eine Steuereinrichtung der Fertigungsstation handeln, welche die entsprechende Funktionalität mit übernimmt. Zur Durchführung des Verfahrens bedarf es dann lediglich eines Upgrades oder einer Ergänzung eines auf der Recheneinrichtung ablaufenden Computerprogrammprodukts. Ist die Recheneinrichtung an der Fertigungsstation angeordnet, ist sie insbesondere extern oder zusätzlich zu der Fertigungsstation vorgesehen. Dies stellt in besonders einfacher und komfortabler Weise eine Nachrüstlösung dar, wobei bestehende Fertigungsstationen, insbesondere solche, deren Steuereinrichtungen nicht mit einem entsprechend angepassten Computerprogramm nachgerüstet werden können, zur Durchführung des Verfahrens ertüchtigt werden können.

Die Signalabnahmevorrichtung ist mit der Recheneinrichtung bevorzugt über eine kabelgebundene Wirkverbindung verbunden. Vorzugsweise können über die kabelgebundene Wirkverbindung sowohl Daten als auch elektrische Leistung übertragen werden, sodass die Signalabnahmevorrichtung über die Recheneinrichtung mit elektrischer Leistung versorgt werden kann und keiner eigenen, separaten Spannungsversorgung bedarf. Es ist aber auch möglich, dass die Signalabnahmevorrichtung mit der Recheneinrichtung über eine kabellose Wirkverbindung, insbesondere eine Funkverbindung oder optische Verbindung, insbesondere WLAN, Bluetooth oder eine Infrarotschnittstelle, verbunden ist.

Die von dem wenigstens einen maschinenlesbaren Datum abhängige Information kann in einer besonders einfachen Ausgestaltung des Verfahrens das Datum selbst sein. Es ist aber auch möglich, dass die Information in Abhängigkeit von dem Datum und/oder auf der Grundlage des Datums erstellt wird, insbesondere durch Auswerten des Datums.

Gemäß einer Ausgestaltung des Verfahrens wird die Information direkt von der Signalabnahmevorrichtung oder der Recheneinrichtung an das entfernte Endgerät übertragen. Dabei besteht eine datenübertragende Verbindung bevorzugt über ein Netzwerk, insbesondere ein Mobilfunknetzwerk oder das Internet.

Gemäß einer Weiterbildung der Erfindung ist in besonders bevorzugter Weise allerdings vorgesehen, dass das maschinenlesbare Datum nach dem automatischen Erfassen des Signals und vor dem Übertragen der Information an das entfernte Endgerät - von der Signalabnahmevorrichtung oder der Recheneinrichtung - auf einen Dienstgeber hochgeladen wird, wobei die Information von dem Dienstgeber auf das entfernte Endgerät übertragen, insbesondere von dem Dienstgeber an das entfernte Endgerät gesendet (push) oder durch das entfernte Endgerät von dem Dienstgeber heruntergeladen (pull) wird. Bevorzugt wird die Information von der Recheneinrichtung auf den Dienstgeber hochgeladen. Die Zwischenschaltung eines Dienstgebers ermöglicht in besonders vorteilhafter Weise zusätzliche Auswerteschritte und/oder eine Bereitstellung der Information an eine Mehrzahl von Endgeräten.

Bei dem Dienstgeber handelt es sich bevorzugt um einen zentralen, insbesondere für mehrere Signalabnahmevorrichtungen und/oder mehrere Recheneinrichtungen und/oder mehrere entfernte Endgeräte zugänglichen Dienstgeber. Der Dienstgeber ist insbesondere von der Fertigungsstation entfernt angeordnet. Eine Verbindung zwischen der Signalabnahmevorrichtung und/oder der Recheneinrichtung einerseits und dem Dienstgeber andererseits besteht bevorzugt über ein Netzwerk, insbesondere über ein Mobilfunknetzwerk oder das Internet. Die Verbindung zwischen dem Dienstgeber einerseits und dem entfernten Endgerät andererseits besteht bevorzugt über ein Netzwerk, insbesondere über ein Mobilfunknetzwerk oder das Internet. Der Dienstgeber kann als einzelner Server oder als Zusammenschluss untereinander vernetzter Server ausgestaltet sein. Insbesondere kann es sich bei dem Dienstgeber um eine Datenwolke, insbesondere eine sogenannte Cloud, handeln.

Gemäß einer Weiterbildung der Erfindung ist vorgesehen, dass eine Mehrzahl von Signalen an einer Mehrzahl von Fertigungsstationen erfasst wird, insbesondere an jeder Fertigungsstation wenigstens ein Signal, wobei eine Mehrzahl von den Signalen zugeordneten Informationen an ein gemeinsames Endgerät übertragen wird. Auf diese Weise ist die Überwachung einer Mehrzahl von Fertigungsstationen durch einen selben Beobachter über dasselbe entfernte Endgerät möglich, sodass es insbesondere möglich ist, einen Gesamtprozess zu überwachen, der eine Mehrzahl von Prozessschritte einschließt und sich über eine Mehrzahl von Fertigungsstationen erstreckt. Bevorzugt werden die den Signalen zugeordneten Informationen oder den Signalen zugeordneten maschinenlesbaren Daten auf einen gemeinsamen Dienstgeber hochgeladen und von dort an das gemeinsame Endgerät übertragen. Dies ermöglicht eine zentrale Erfassung der Daten von verschiedenen Fertigungsstationen, wobei somit zugleich die verschiedenen Fertigungsstationen miteinander über den gemeinsamen Dienstgeber vernetzt sind.

Gemäß einer Weiterbildung der Erfindung ist vorgesehen, dass das wenigstens eine maschinenlesbare Datum auf dem Dienstgeber oder auf dem Endgerät ausgewertet wird. Wird das maschinenlesbare Datum auf dem Dienstgeber ausgewertet, handelt es sich bei der Information bevorzugt um das wenigstens eine ausgewertete Datum beziehungsweise eine Auswertung des wenigstens einen Datums. Wird das wenigstens eine maschinenlesbare Datum auf dem entfernten Endgerät ausgewertet, handelt es sich bei der Information bevorzugt um das wenigstens eine maschinenlesbare Datum selbst. Besonders bevorzugt werden eine Mehrzahl maschinenlesbarer Daten, insbesondere eine Mehrzahl von verschiedenen Fertigungsstationen zugeordneten maschinenlesbaren Daten auf dem gemeinsamen Dienstgeber oder auf dem gemeinsamen entfernten Endgerät ausgewertet. Dies erlaubt letztlich eine Analyse und Bewertung eines Gesamtprozesses, der mehrere Fertigungsstationen einschließt. Dabei findet in besonders einfacher Weise eine Vernetzung der verschiedenen Fertigungsstationen statt, die auch unabhängig von in den einzelnen Fertigungsstationen gegebenenfalls implementierten Schnittstellen erfolgen kann, da es lediglich des Erfassens des jeweiligen psychophysiologisch-sensorisch wahrnehmbaren Signals bedarf. Selbst untereinander inkompatible Fertigungsstationen und/oder Fertigungsstationen verschiedener Hersteller können so in einfacher Weise miteinander vernetzt werden, wobei Informationen über diese Fertigungsstationen zusammengeführt, einem Beobachter zugänglich gemacht und gemeinsam ausgewertet werden können. Auch ein Betreiber eines kleinen Maschinenparks mit einer Mehrzahl verschiedener Fertigungsstationen kann so in einfacher Weise, und ganz besonders auch durch Nachrüsten seiner Fertigungsstationen, eine Evaluierung der einzelnen Fertigungsstationen und auch von Gesamtprozessen durchführen, und dies auch an einem entfernten Ort, von dem aus keine unmittelbare Beobachtung der Fertigungsstationen möglich ist.

Bevorzugt wird eine Mehrzahl von maschinenlesbaren Daten statistisch ausgewertet. Insbesondere kann auf diese Weise eine Bewertung in Hinblick auf eine Effektivität oder Effizienz eines Gesamtprozesses erfolgen. Besonders bevorzugt wird eine grafische Repräsentation der Mehrzahl maschinenlesbarer Daten erstellt. dies erlaubt eine besonders intuitive und schnelle Erfassung der ausgewerteten Daten. Die grafische Repräsentation wird bevorzugt dem Beobachter auf dem entfernten Endgerät angezeigt.

Gemäß einer Weiterbildung der Erfindung ist vorgesehen, dass auf dem Dienstgeber oder auf dem entfernten Endgerät anhand des maschinenlesbaren Datums oder der von dem maschinenlesbaren Datum abhängigen Information Rüstzeiten, Produktionszeiten und/oder Stillstandszeiten der wenigstens einen Fertigungsstation, insbesondere einer Mehrzahl von Fertigungsstationen, erfasst werden. Insbesondere können solche Rüstzeiten, Produktionszeiten und/oder Stillstandszeiten grafisch dargestellt und/oder ausgewertet werden. Unter einer Rüstzeit wird dabei eine Zeit verstanden, in welcher die Fertigungsstation planmäßig ruht, weil beispielsweise ein Werkzeug- und/oder Werkstückwechsel stattfindet. Unter einer Produktionszeit wird eine Zeit verstanden, zu welcher die Fertigungsstation produktiv arbeitet, insbesondere ein Werkstück bearbeitet. Unter einer Stillstandszeit wird eine Zeit verstanden, in welcher die Fertigungsstation ungeplant, insbesondere aufgrund eines Fehlers oder eines technischen Ausfalls oder dergleichen stillsteht. Entsprechende Zustände einer Fertigungsstation werden üblicherweise mittels einer Maschinenampel durch verschiedene Farbsignale, insbesondere Farbleuchten, signalisiert. In bevorzugter Ausgestaltung signalisiert dabei ein aktiviertes rotes Leuchten eine Stillstandszeit, ein aktiviertes grünes Leuchten signalisiert eine Produktionszeit, und ein aktiviertes gelbes Leuchten signalisiert eine Rüstzeit.

Die Aufgabe wird auch gelöst, indem eine Signalabnahmevorrichtung für ein erfindungsgemäßes Verfahren oder für ein Verfahren nach einer der zuvor beschriebenen Ausführungsformen geschaffen wird, wobei die Signalabnahmevorrichtung eine Sensiereinrichtung aufweist, die eingerichtet ist zum automatischen Erfassen von wenigstens einem psychophysiologisch-sensorisch wahrnehmbaren Signal. Die Signalabnahmevorrichtung weist außerdem eine Kommunikationseinrichtung auf, die eingerichtet ist zur Übertragung eines in Abhängigkeit von dem wenigstens einen erfassten Signal erzeugten oder erfassten maschinenlesbaren Datums an eine von der Signalabnahmevorrichtung separate Datenverarbeitungseinrichtung. In Zusammenhang mit der Signalabnahmevorrichtung ergeben sich insbesondere die Vorteile, die bereits in Zusammenhang mit dem Verfahren erläutert wurden. Insbesondere ermöglicht die Signalabnahmevorrichtung in einfacher und kostengünstiger Weise eine Beobachtung einer Fertigungsstation auch von einem entfernten Ort aus, sowie eine einfache und kostengünstige Vernetzung einer Mehrzahl von Fertigungsstationen, insbesondere über ein gemeinsames entferntes Endgerät und/oder einen gemeinsamen Dienstgeber.

Entsprechend ist die von der Signalabnahmevorrichtung separate Datenverarbeitungseinrichtung bevorzugt eine Recheneinrichtung, insbesondere eine in oder an der Fertigungsstation angeordnete Recheneinrichtung, ein Dienstgeber, insbesondere ein von der Fertigungsstation entfernt angeordneter, insbesondere zentraler Dienstgeber, oder ein von der Fertigungsstation entferntes Endgerät.

Die Signalabnahmevorrichtung ist bevorzugt eingerichtet, um das wenigstens eine erfasste Signal in wenigstens ein maschinenlesbares Datum umzuwandeln, wobei insbesondere das physikalische Signal in ein elektronisches Datum gewandelt wird. Besonders bevorzugt ist die Signalabnahmevorrichtung eingerichtet zur Digitalisierung und/oder zur digitalen Repräsentation des Signals.

Gemäß einer Weiterbildung der Erfindung ist vorgesehen, dass die Signalabnahmevorrichtung wenigstens ein Befestigungsmittel aufweist, das eingerichtet ist, um die Signalabnahmevorrichtung an der Fertigungsstation zu befestigen. Mittels des Befestigungsmittels kann die Signalabnahmevorrichtung in einfacher Weise - insbesondere als Nachrüstlösung - an der Fertigungsstation angebracht werden.

Gemäß einer Weiterbildung der Erfindung ist vorgesehen, dass die Sensiereinrichtung eingerichtet ist, um einen Zustand einer optisch wahrnehmbaren, insbesondere durch den menschlichen Gesichtssinn optisch wahrnehmbaren, Maschinenampel zu erfassen. Dies ermöglicht in besonders einfacher, wenig aufwendiger und auch kostengünstiger Weise die Erfassung eines momentanen Zustands der Fertigungsstation. Insbesondere ist die Signalabnahmevorrichtung bevorzugt eingerichtet, um eine aktive Farbe, insbesondere eine aktiv leuchtende Farbe, der Maschinenampel als Signal in wenigstens ein maschinenlesbares Datum umzuwandeln.

Gemäß einer Weiterbildung der Erfindung ist vorgesehen, dass die Sensiereinrichtung - insbesondere zu diesem Zweck - eine Mehrzahl von Photosensoren aufweist, wobei jeder Photosensor einer Farbe oder Farbleuchte der Maschinenampel zugeordnet ist, insbesondere um zu erfassen, ob die jeweilige Farbe oder Farbleuchte aktiv ist, insbesondere aktiv leuchtet. In bevorzugter Ausgestaltung weist die Sensiereinrichtung drei Photosensoren auf, wobei jeder Photosensor jeweils einer der drei Farben der Maschinenampel, insbesondere Rot, Gelb und Grün, zugeordnet ist. In bevorzugter Ausgestaltung sind die drei Photodioden übereinander oder nebeneinander angeordnet, insbesondere derart, dass jeder Photosensor unmittelbar an einer Farbleuchte der Maschinenampel angeordnet werden kann. Dabei sind die Photosensoren bevorzugt miteinander verbunden und gemeinsam handhabbar. Insbesondere kann die Signalabnahmevorrichtung als ein Teil derart an der Maschinenampel angeordnet werden, dass jeder Photosensor unmittelbar an einer Farbleuchte der Maschinenampel angeordnet ist.

Die Photosensoren sind bevorzugt als Photodioden ausgebildet.

Gemäß einer Weiterbildung der Erfindung ist vorgesehen, dass das Befestigungsmittel als Clip ausgebildet ist. Auf diese Weise kann die Signalabnahmevorrichtung sehr einfach an die Fertigungsstation, insbesondere an eine Maschinenampel der Fertigungsstation, angeclipst werden. Besonders bevorzugt weist die Signalabnahmevorrichtung als Befestigungsmittel drei Clips auf, wobei bevorzugt jeder Clip einem Photosensor zugeordnet ist, und wobei bevorzugt jeder Clip eingerichtet ist, um den ihm jeweils zugeordneten Photosensor unmittelbar an einer Farbleuchte der Maschinenampel anzuordnen und zu halten. Dies ermöglicht eine besonders stabile Befestigung der Signalabnahmevorrichtung und insbesondere der einzelnen Photosensoren an der Maschinenampel.

Alternativ ist es möglich, dass die Signalabnahmevorrichtung als Befestigungsmittel wenigstens einen Klettverschluss, vorzugsweise drei Klettverschlüsse, aufweist.

Alternativ ist es möglich, dass die Signalabnahmevorrichtung als Befestigungsmittel wenigstens ein elastisches Band, vorzugsweise drei elastische Bänder aufweist.

Insbesondere ist es möglich, dass das Befestigungsmittel eingerichtet ist zur Befestigung an einer zylindrischen Maschinenampel, wobei das Befestigungsmittel bevorzugt auf zu der Maschinenampel komplementäre Weise zumindest teilzylindrisch ausgebildet oder teilzylindrisch formbar ist.

Die Aufgabe wird schließlich auch gelöst, indem eine Verwendung einer erfindungsgemäßen Signalabnahmevorrichtung oder einer Signalabnahmevorrichtung nach einem der zuvor beschriebenen Ausführungsbeispiele zum Überwachen von wenigstens einer Fertigungsstation in einem erfindungsgemäßen Verfahren oder einem Verfahren nach einer der zuvor beschriebenen Ausführungsformen geschaffen wird. In Zusammenhang mit der Verwendung ergeben sich insbesondere die Vorteile, die bereits in Zusammenhang mit dem Verfahren einerseits und der Signalabnahmevorrichtung andererseits erläutert wurden.

Die Erfindung wird im Folgenden anhand der Zeichnung näher erläutert. Dabei zeigen:
- Figur 1: eine schematische Darstellung eines Ausführungsbeispiels eines Verfahren zum Überwachen wenigstens einer Fertigungsstation, und
- Figur 2: eine Darstellung eines Ausführungsbeispiels einer Signalabnahmevorrichtung für das Verfahren gemäß Figur 1.

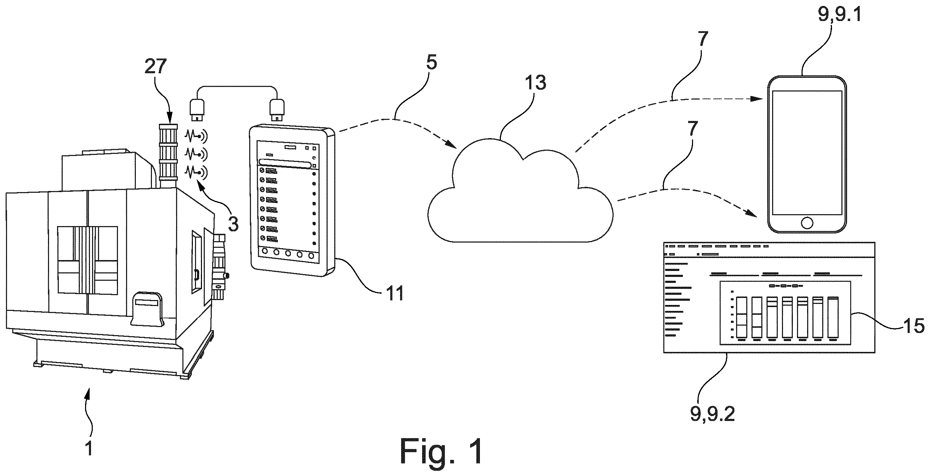

**Fig. 1** zeigt eine schematische Darstellung einer Ausführungsform eines Verfahrens zum Überwachen von wenigstens einer Fertigungsstation 1, wobei wenigstens ein psychophysiologisch-sensorisch wahrnehmbares Signal 3 automatisch an der Fertigungsstation 1 erfasst wird. Sodann wird in Abhängigkeit von dem wenigstens einen erfassten Signal 3 wenigstens ein maschinenlesbares Datum 5 erzeugt oder verändert, und es wird eine von dem wenigstens einen maschinenlesbaren Datum 5 abhängige Information 7 an ein von der Fertigungsstation 1 entferntes Endgerät 9 übertragen. Dabei kann das entfernte Endgerät 9 insbesondere ein mobiles Endgerät 9.1 oder ein stationäres Endgerät 9.2 sein. Es ist so einem Beobachter möglich, psychophysiologisch-sensorisch wahrnehmbare Signale 3 nicht nur unmittelbar an der Fertigungsstation 1, sondern vielmehr auch entfernt von der Fertigungsstation 1, insbesondere an einem beliebigen Ort, mittels des Endgeräts 9 zu beobachten und so einen Zustand der Fertigungsstation 1 zu überwachen.

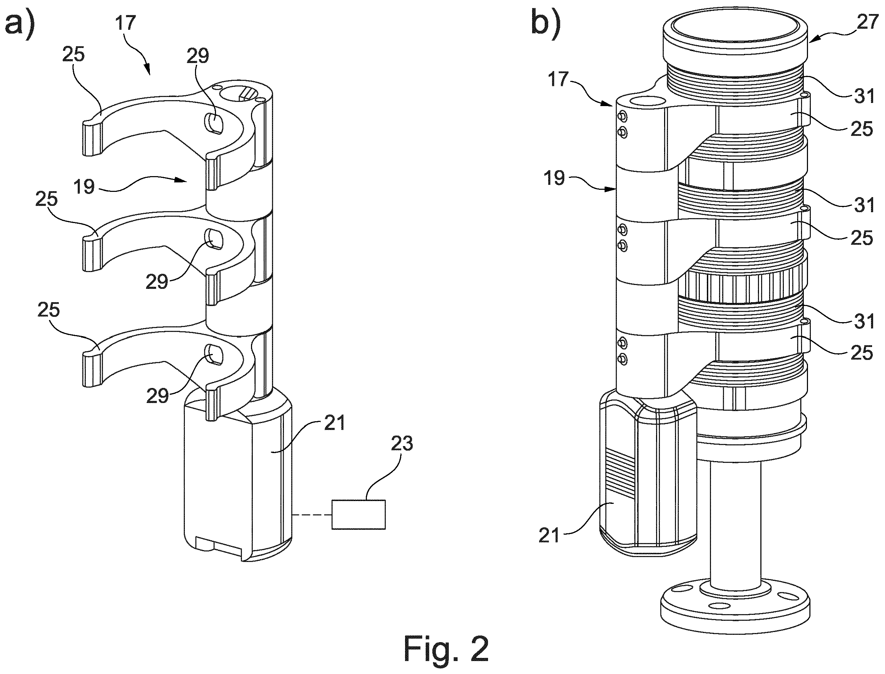

Bevorzugt wird das maschinenlesbare Datum 5 von einer in Figur 2 dargestellten, das Signal 3 erfassenden Signalabnahmevorrichtung 17 erzeugt oder verändert und auf eine Recheneinrichtung 11 übertragen, die in der Fertigungsstation 1 oder an der Fertigungsstation 1 angeordnet ist. Insbesondere eine von der Fertigungsstation 1 separate Recheneinrichtung 11 erlaubt ein einfaches Nachrüsten der Fertigungsstation 1 zur Durchführung des Verfahrens.

Vorzugsweise wird das maschinenlesbare Datum 5 zunächst auf einen Dienstgeber 13 hochgeladen, bevor dann die Information 7 von dem Dienstgeber 13 auf das Endgerät 9 übertragen, insbesondere an das Endgerät 9 gesendet oder durch das Endgerät 9 von dem Dienstgeber 13 heruntergeladen wird. Die Verbindung zwischen dem Dienstgeber 13 und der Recheneinrichtung 11 oder der an der Fertigungsstation 1 angeordneten Signalabnahmevorrichtung 17 besteht bevorzugt über ein Netzwerk, insbesondere über das Internet oder ein Mobilfunknetz. Die Verbindung zwischen dem Dienstgeber 13 und dem Endgerät 9 besteht bevorzugt über ein Netzwerk, insbesondere über das Internet oder ein Mobilfunknetz.

Vorzugsweise werden an verschiedenen Fertigungsstationen 1 eine Mehrzahl von Signalen 3 erfasst, wobei letztlich eine Mehrzahl von den Signalen 3 jeweils zugeordneten Informationen 7 an das gemeinsame Endgerät 9 übertragen werden. Bevorzugt werden zuvor in Abhängigkeit von den erfassten Signalen 3 erzeugte oder veränderte maschinenlesbare Daten 5 auf den gemeinsamen Dienstgeber 13 hochgeladen. Von dort können dann wiederum die Informationen 7 an das gemeinsame Endgerät 9 übertragen werden.

Bevorzugt wird das wenigstens eine maschinenlesbare Datum 5 auf dem Dienstgeber 13 oder auf dem Endgerät 9 ausgewertet. Besonders bevorzugt erfolgt eine statistische Auswertung einer Mehrzahl von Daten 5, insbesondere in Hinblick auf eine Effektivität oder Effizienz eines Gesamtprozesses, der eine Mehrzahl von Fertigungsstationen 1 umfasst. Insbesondere ist es möglich, dass auf dem Endgerät 9 eine grafische Repräsentation 15 der Mehrzahl von Daten 5 und/oder der Informationen 7 angezeigt wird.

Die Information 7 ist insbesondere entweder das wenigstens eine maschinenlesbare Datum 5 selbst, oder sie wird abhängig von dem wenigstens einen maschinenlesbaren Datum 5 erzeugt, insbesondere durch Auswerten des wenigstens einen maschinenlesbaren Datums 5. Insbesondere kann es sich bei der Information 7 um eine Auswertung, insbesondere eine statistische Auswertung, eine Mehrzahl von maschinenlesbaren Daten 5 handeln.

Vorzugsweise werden auf dem Dienstgeber 13 oder dem Endgerät 9 anhand des wenigstens einen maschinenlesbaren Datums 5 oder anhand der Information 7 Rüstzeiten, Produktionszeiten und/oder Stillstandszeiten der wenigstens einen Fertigungsstation 1, besonders bevorzugt einer Mehrzahl von Fertigungsstationen 1, erfasst.

**Fig. 2** zeigt bei a) eine schematische Darstellung eines Ausführungsbeispiels einer Signalabnahmevorrichtung 17 zur Durchführung der Ausführungsform des Verfahrens gemäß Figur 1. Die Signalabnahmevorrichtung 17 weist eine Sensiereinrichtung 19 auf, die eingerichtet ist, um das wenigstens eine psychophysiologisch-sensorisch wahrnehmbare Signal 3 an der Fertigungsstation 1 automatisch zu erfassen, sowie außerdem eine Kommunikationseinrichtung 21, die eingerichtet ist, um wenigstens ein in Abhängigkeit von dem wenigstens einen erfassten Signal 3 erzeugtes oder verändertes maschinenlesbare Datum 5 an eine von der Signalabnahmevorrichtung 17 separate Datenverarbeitungseinrichtung 23 zu übertragen. Die Datenverarbeitungseinrichtung 23 ist dabei bevorzugt die in Zusammenhang mit Figur 1 erläuterte Recheneinrichtung 1, der Dienstgeber 13 oder das Endgerät 9. In besonders bevorzugter Ausgestaltung ist die Datenverarbeitungseinrichtung 23 die Recheneinrichtung 11.

Die Signalabnahmevorrichtung 17 weist wenigstens ein Befestigungsmittel 25, hier drei Befestigungsmittel 25, in Form von Clips auf, die eingerichtet sind, um die Signalabnahmevorrichtung 17 an der Fertigungsstation 1 zu befestigen. Alternativ ist es möglich, dass das Befestigungsmittel 25 wenigstens einen Klettverschluss oder wenigstens ein elastisches Band, insbesondere eine Mehrzahl von Klettverschlüssen oder eine Mehrzahl elastischer Bänder, aufweist.

Die Sensiereinrichtung 19 ist bevorzugt eingerichtet, um den Zustand einer optisch wahrnehmbaren, bei b) dargestellten Maschinenampel 27 der Fertigungsstation 1 zu erfassen. Die Maschinenampel 27 ist auch in Figur 1 dargestellt. Hierzu weist die Sensiereinrichtung 19 drei Photosensoren 29, vorzugsweise drei Photodioden, auf, wobei die Photosensoren 29 so eingerichtet und angeordnet sind, dass sie jeweils unmittelbar an einer Farbleuchte 31 der Maschinenampel 27 angeordnet werden können. Die Maschinenampel 27 weist dabei insbesondere drei Farbleuchten 31 auf, nämlich eine rote Farbleuchte, eine gelbe Farbleuchte und eine grüne Farbleuchte, die typischerweise übereinander angeordnet sind, insbesondere die rote Farbleuchte oben, die gelbe Farbleuchte in der Mitte, und die grüne Farbleuchte unten.

Jedem der Photosensoren 29 ist hier ein Clip als Befestigungsmittel 25 zugeordnet, sodass die Signalabnahmevorrichtung 17 besonders stabil an der Maschinenampel 27 befestigt werden kann, wobei zugleich jeder Photosensor 29 unmittelbar an der ihm zugeordneten Farbleuchte 31 der Maschinenampel 27 befestigt wird. Auf diese Weise kann mittels der Photosensoren 39 leicht erfasst werden, welche der Farbleuchten 31 gerade aktiv ist, das heißt leuchtet. Somit kann mittels der Signalabnahmevorrichtung 17 auch leicht ein momentaner Zustand der Fertigungsstation 1 anhand des Zustands der Maschinenampel 27, das heißt anhand der momentan aktiven Farbleuchte 31, erfasst werden.

Als maschinenlesbares Datum 5 wird dann bevorzugt insbesondere übermittelt, welche der Farbleuchten 31 momentan leuchtet. Als Informationen 7, insbesondere als ausgewertete Informationen 7, können beispielsweise Leuchtzeiten, insbesondere eine statistische Auswertung der Leuchtzeiten, der einzelnen Farbleuchten 31 und somit zugleich Zustandszeiten, insbesondere statistische Auswertungen von Zustandszeiten, der Fertigungsstation 1 übermittelt werden. Insbesondere können so Produktionszeiten (grüne Farbleuchte leuchtet), Rüstzeiten (gelbe Farbleuchte leuchtet) und Stillstandszeiten (rote Farbleuchte leuchtet) übermittelt und ausgewertet werden. Wird dies für eine Vielzahl von Fertigungsstationen 1 und somit auch eine Vielzahl von Maschinenampeln 27 durchgeführt, kann ein gesamter Fertigungsprozess oder Gesamtprozess analysiert und bewertet werden. Insbesondere können dabei auch Probleme an einzelnen Fertigungsstationen 1 identifiziert werden, die gegebenenfalls abträglich für den Gesamtprozess sind oder sich negativ aus diesen auswirken.

Letztlich kann so auch in einfacher und kostengünstiger Weise, insbesondere auch nachträglich, insbesondere als Nachrüstlösung, eine Vernetzung einer Mehrzahl von Fertigungsstationen 1, insbesondere in einem kleinen Maschinenpark, verwirklicht werden.

## Patentansprüche

1. Verfahren zum Überwachen von wenigstens einer Fertigungsstation (1), wobei:
a) wenigstens ein durch die Fertigungsstation (1) zur Wahrnehmung durch einen menschlichen Beobachter erzeugtes, mit menschlichen Sinnen wahrnehmbares Signal (3) an der wenigstens einen Fertigungsstation (1) mittels einer Signalabnahmevorrichtung (17) automatisch erfasst wird, wobei
b) wenigstens ein maschinenlesbares Datum (5) in Abhängigkeit von dem wenigstens einen erfassten Signal (3) erzeugt oder verändert wird, und wobei
c) eine von dem wenigstens einen maschinenlesbaren Datum abhängige Information (7) an ein von der wenigstens einen Fertigungsstation (1) entferntes Endgerät (9) übertragen wird.

2. Verfahren nach Anspruch 1, **dadurch gekennzeichnet, dass** das maschinenlesbare Datum (5) nach dem Schritt b) und vor dem Schritt c) auf einen Dienstgeber (13) hochgeladen wird, wobei die von dem wenigstens einen maschinenlesbaren Datum (5) abhängige Information (7) in dem Schritt c) von dem Dienstgeber (13) auf das Endgerät (9) übertragen wird.

3. Verfahren nach einem der vorhergehenden Ansprüche, **dadurch gekennzeichnet, dass** eine Mehrzahl von Signalen (3) an einer Mehrzahl von Fertigungsstationen (1) erfasst wird, wobei eine Mehrzahl von den Signalen (3) zugeordneten Informationen (7) an ein gemeinsames Endgerät (9) übertragen wird.

4. Verfahren nach einem der vorhergehenden Ansprüche, **dadurch gekennzeichnet, dass** das wenigstens eine maschinenlesbare Datum (5) auf dem Dienstgeber (13) oder auf dem Endgerät (9) ausgewertet wird.

5. Verfahren nach einem der vorhergehenden Ansprüche, **dadurch gekennzeichnet, dass** auf dem Dienstgeber (13) oder dem Endgerät (9) anhand des maschinenlesbaren Datums (5) oder der von dem maschinenlesbaren Datum (5) abhängigen Information (7) Rüstzeiten, Produktionszeiten und/oder Stillstandszeiten der wenigstens einen Fertigungsstation (1) erfasst werden.

6. Signalabnahmevorrichtung (17) für ein Verfahren nach einem der Ansprüche 1 bis 5, mit
- einer Sensiereinrichtung (19), eingerichtet zum automatischen Erfassen von wenigstens einem durch eine Fertigungsstation (1) zur Wahrnehmung durch einen menschlichen Beobachter erzeugten, mit menschlichen Sinnen wahrnehmbaren Signal (3) an der Fertigungsstation (1), und
- einer Kommunikationseinrichtung (21), eingerichtet zur Übertragung eines in Abhängigkeit von dem wenigstens einen erfassten Signal (3) erzeugten oder veränderten maschinenlesbaren Datums (5) an eine von der Signalabnahmevorrichtung (17) separate Datenverarbeitungseinrichtung (23).

7. Signalabnahmevorrichtung (17) nach Anspruch 6, **gekennzeichnet durch** wenigstens ein Befestigungsmittel (25), eingerichtet zur Befestigung der Signalabnahmevorrichtung (17) an einer Fertigungsstation (1).

8. Signalabnahmevorrichtung (17) nach einem der Ansprüche 6 oder 7, **dadurch gekennzeichnet, dass** die Sensiereinrichtung (19) eingerichtet ist, um einen Zustand einer optisch wahrnehmbaren Maschinenampel (27) zu erfassen.

9. Signalabnahmevorrichtung (17) nach einem der Ansprüche 6 bis 8, **dadurch gekennzeichnet, dass** die Sensiereinrichtung eine Mehrzahl von Photosensoren (29) aufweist.

10. Signalabnahmevorrichtung (17) nach einem der Ansprüche 6 bis 9, **dadurch gekennzeichnet, dass** das wenigstens eine Befestigungsmittel (25) als Clip, oder als Klettverschluss, oder als elastisches Band, ausgebildet ist.

11. Verwendung einer Signalabnahmevorrichtung (17) nach einem der Ansprüche 6 bis 10 zur Erfassung von wenigstens einem durch eine Fertigungsstation (1) zur Wahrnehmung durch einen menschlichen Beobachter erzeugten, mit menschlichen Sinnen wahrnehmbaren Signal (3) an der Fertigungsstation (1) in einem Verfahren nach einem der Ansprüche 1 bis 5.

## Claims

1. Method for monitoring at least one manufacturing station (1), wherein:
a) at least one signal (3) generated by the manufacturing station (1) for perception by a human observer and perceivable by human senses is automatically detected at the at least one manufacturing station (1) by means of a signal detection device (17), wherein
b) at least one machine-readable data point (5) is generated or modified in dependence on the at least one detected signal (3), and wherein
c) an information (7) dependent on the at least one machine-readable data point is transmitted to an end device (9) remote from the at least one manufacturing station (1).

2. Method according to claim 1, **characterised in that** the machine-readable data point (5) is uploaded to a service provider (13) after step b) and before step c), wherein the information (7) dependent on the at least one machine-readable data point (5) is transmitted in step c) by the service provider (13) to the end device (9).

3. Method according to one of the preceding claims, **characterised in that** a plurality of signals (3) are detected at a plurality of manufacturing stations (1), wherein a plurality of information (7) assigned to the signals (3) are transmitted to a common end device (9).

4. Method according to one of the preceding claims, **characterised in that** the at least one machine-readable data point (5) is evaluated on the service provider (13) or on the end device (9).

5. Method according to one of the preceding claims, **characterised in that** set-up times, production times and/or downtimes of the at least one manufacturing station (1) are recorded on the service provider (13) or the end device (9) on the basis of the machine-readable data point (5) or the information (7) dependent on the machine-readable data point (5).

6. Signal detection device (17) for a method according to one of claims 1 to 5, comprising
- a sensing device (19) arranged to automatically detect at least one signal (3) generated by a manufacturing station (1) for perception by a human observer and perceivable by human senses at the manufacturing station (1), and
- a communication device (21) arranged to transmit a machine-readable data point (5) generated or modified in dependence on the at least one detected signal (3) to a data processing device (23) separate from the signal detection device (17).

7. Signal detection device (17) according to claim 6, **characterised by** at least one mounting device (25) arranged to attach the signal detection device (17) to a manufacturing station (1).

8. Signal detection device (17) according to one of claims 6 or 7, **characterised in that** the sensing device (19) is arranged to detect a state of an optically perceptible machine status light (27).

9. Signal detection device (17) according to one of claims 6 to 8, **characterised in that** the sensing device has a plurality of photosensors (29).

10. Signal detection device (17) according to one of claims 6 to 9, **characterised in that** the at least one mounting device (25) is configured as a clip, or as a hook-and-loop fastener, or as an elastic band.

11. Use of a signal detection device (17) according to one of claims 6 to 10 for detecting at least one signal (3) generated by a manufacturing station (1) for perception by a human observer and perceivable by human senses at the manufacturing station (1) in a method according to one of claims 1 to 5.

## Revendications

1. Procédé de surveillance d'au moins une station de production (1), dans lequel :
a) au moins un signal (3) perceptible par les sens humains et généré par la station de production (1) afin d'être perçu par un observateur humain est automatiquement détecté au niveau de la au moins une station de production (1) au moyen d'un dispositif de réception de signal (17),
b) au moins une donnée (5) lisible par machine est générée ou modifiée en fonction du au moins un signal détecté (3), et dans lequel
c) une information (7) dépendant de la au moins une donnée lisible par machine est transférée à un terminal (9) distant de la au moins une station de production (1).

2. Procédé selon la revendication 1, **caractérisé en ce que** la donnée (5) lisible par machine est téléchargée sur un fournisseur de services (13) après l'étape b) et avant l'étape c), dans lequel l'information (7) dépendant de la au moins une donnée (5) lisible par machine est transférée du fournisseur de services (13) au terminal (9) à l'étape c).

3. Procédé selon l'une quelconque des revendications précédentes, **caractérisé en ce qu'**une pluralité de signaux (3) sont détectés au niveau d'une pluralité de stations de production (1), dans lequel une pluralité d'informations (7) associées aux signaux (3) sont transmises à un terminal (9) commun.

4. Procédé selon l'une quelconque des revendications précédentes, **caractérisé en ce que** la au moins une donnée (5) lisible par machine est évaluée sur le fournisseur de services (13) ou sur le terminal (9).

5. Procédé selon l'une quelconque des revendications précédentes, **caractérisé en ce que** des temps d'équipement, des temps de production et/ou des temps d'arrêt de la au moins une station de production (1) sont enregistrés sur le fournisseur de services (13) ou le terminal (9) à l'aide de la donnée (5) lisible par machine ou de l'information (7) dépendant de la donnée (5) lisible par machine.

6. Dispositif de réception de signal (1) pour un procédé selon l'une quelconque des revendications 1 à 5, comprenant
- un dispositif de détection (19) conçu pour détecter automatiquement au niveau de la station de production (1) au moins un signal (3) perceptible par les sens humains et généré par une station de production (1) afin d'être perçu par un observateur humain, et
- un dispositif de communication (21) conçu pour transmettre à un dispositif de traitement de données (23) séparé du dispositif de réception de signal (17) une donnée (5) lisible par machine générée ou modifiée en fonction du au moins un signal (3) détecté.

7. Dispositif de réception de signal (17) selon la revendication 6, **caractérisé par** au moins un moyen de fixation (25) conçu pour fixer le dispositif de réception de signal (17) à une station de production (1).

8. Dispositif de réception de signal (17) selon la revendication 6 ou 7, **caractérisé en ce que** le dispositif de détection (19) est conçu pour détecter un état d'un feu de signalisation de machine (27) optiquement perceptible.

9. Dispositif de réception de signal (17) selon l'une quelconque des revendications 6 à 8, **caractérisé en ce que** le dispositif de détection présente une pluralité de capteurs photoélectriques (29).

10. Dispositif de réception de signal (17) selon l'une quelconque des revendications 6 à 9, **caractérisé en ce que** le au moins un moyen de fixation (25) est réalisé sous la forme d'un clip, ou sous la forme d'une fermeture velcro, ou sous la forme d'une bande élastique.

11. Utilisation, dans un procédé selon l'une quelconque des revendications 1 à 5, d'un dispositif de réception de signal (17) selon l'une quelconque des revendications 6 à 10 permettant de détecter au niveau de la station de production (1) au moins un signal (3) perceptible par les sens humains et généré par une station de production (1) afin d'être perçu par un observateur humain.
